# FASCICULE DE BREVET EUROPEEN

(11) **EP 4 483 707 B1**
(45) Date de publication et mention de la délivrance du brevet: **18.03.2026**
(21) Numéro de dépôt: 23306099.5
(22) Date de dépôt: 30.06.2023
(51) Int. Cl.: A01G 18/70, B65B 5/08, B65B 25/04, B65B 35/18, B65B 57/14, G01G 19/387

(54) **DISPOSITIF POUR LE CONVOYAGE INDIVIDUEL D'UN CHAMPIGNON, PROCÉDÉ ET UTILISATION ASSOCIÉS**
VORRICHTUNG ZUM INDIVIDUELLEN TRANSPORT EINES PILZES, DAMIT VERBUNDENES VERFAHREN UND VERWENDUNG
DEVICE FOR THE INDIVIDUAL CONVEYANCE OF A MUSHROOM, ASSOCIATED METHOD AND USE

(43) Date de publication de la demande: 01.01.2025
(60) Demande divisionnaire: 25193775.1
(73) Titulaire: CABANE & CIE, 40160 Parentis-en-Born (FR)
(72) Inventeur: AUDOY, Vincent, 40210 LUE (FR)
(74) Mandataire: Froberger, Matthieu

(56) Documents cités:
- EP-A2- 3 815 518
- WO-A1-2022/031171
- CN-A- 113 940 238
- US-A1- 2020 170 201

## Description

### Domaine technique

La présente divulgation concerne le domaine du convoyage et du conditionnement des champignons.

### Technique antérieure

Les champignons doivent être transportés depuis des chambres de culture vers une zone de conditionnement afin d'être conditionnés pour leur commercialisation. Les techniques utilisées pour le transport et le conditionnement des champignons reposent au moins en partie sur un travail manuel, qui ne permet pas toujours de préserver la qualité des produits, et qui a l'inconvénient d'être relativement lent.
Il existe en relation avec ce sujet les documents US 2020/0170201 A1 (Device for conveying mushrooms), EP 3 815 518 A1 (Device for transporting and discharging mushrooms) et WO 2022/031171 A1 (A device for packing mushrooms).

La présente divulgation vient au moins en partie améliorer cette situation.

### Résumé

À cet égard, l'invention est réalisée avec les revendications annexées et il est proposé un dispositif pour le convoyage individuel d'un champignon, selon la revendication 1, comprenant un corps de convoyage présentant une chambre destinée à accueillir au moins partiellement le champignon ;
dans lequel le corps de convoyage comprend une surface supérieure et une surface inférieure, opposée à la surface supérieure ;
la surface inférieure du corps de convoyage étant destinée à entrer en contact avec une bande transporteuse d'un convoyeur de façon à permettre l'entrainement du dispositif pour le convoyage individuel du champignon par friction ;
la surface supérieure du corps de convoyage comprenant un orifice permettant l'insertion du champignon dans la chambre et dont le bord délimite une extrémité supérieure de la chambre ;
la chambre comprenant une partie supérieure s'étendant depuis l'orifice de la surface supérieure du corps de convoyage vers la surface inférieure du corps de convoyage et étant conformée pour accueillir au moins partiellement un chapeau du champignon ; et
la chambre comprenant une partie inférieure s'étendant depuis la partie supérieure de la chambre vers la surface inférieure du corps de convoyage et étant conformée pour accueillir un pied de champignon.
La partie inférieure de la chambre présente une forme cylindrique circulaire. Une distance séparant les extrémités du cylindre de la partie inférieure de la chambre du corps de convoyage selon l'axe de révolution du cylindre est comprise entre 40 et 80 millimètres ; et un diamètre du cylindre est compris entre 12 et 32 millimètres.

Optionnellement, la partie supérieure de la chambre peut présenter une forme tronconique dont l'extrémité présentant le plus petit diamètre est positionnée à l'opposé de l'orifice de la surface supérieure du corps de convoyage, et dans lequel la partie inférieure de la chambre s'étend depuis le tronc de cône vers la surface inférieure du corps de convoyage. Dans cette option, une distance séparant les extrémités du tronc de cône de la partie supérieure de la chambre du corps de convoyage selon l'axe de révolution du tronc de cône peut être comprise entre 20 et 50 millimètres ; un diamètre maximal du tronc de cône peut être compris entre 90 et 110 millimètres ; et un diamètre minimal du tronc de cône peut être compris entre 12 et 32 millimètres.

Optionnellement, le corps de convoyage présente une forme extérieure cylindrique circulaire.

La présente divulgation présente en outre un système adapté pour convoyer des champignons comprenant :
un premier convoyeur présentant une bande transporteuse adaptée pour transporter des champignons entre une zone de chargement des champignons dans des dispositifs pour le convoyage individuel selon l'un quelconque des exemples décrits dans la présente divulgation et une zone de déchargement des champignons dans des dispositifs de conditionnement ;
une pluralité de dispositifs pour le convoyage individuel d'un champignon selon l'un quelconque des exemples décrits dans la présente divulgation; et
un dispositif de refroidissement positionné entre la zone de chargement et la zone de déchargement et adapté pour refroidir les champignons lorsqu'ils sont positionnés respectivement dans leur dispositif de convoyage individuel.

Optionnellement, le système peut également être adapté pour conditionner des champignons.

Le système peut ainsi comprendre un dispositif de remplissage configuré pour remplir les dispositifs de conditionnement avec des champignons, le dispositif de remplissage comprenant un premier robot préhenseur de conditionnement, adapté pour saisir un champignon depuis un dispositif pour le convoyage individuel d'un champignon puis positionner ce champignon dans un dispositif de conditionnement.

Optionnellement, le dispositif de remplissage peut également comprendre une peseuse associative et un deuxième robot préhenseur de conditionnement.

La peseuse associative peut comprendre une pluralité de balances. Chaque balance de la pluralité de balances peut être configurée pour peser respectivement un champignon lorsque ce champignon est positionné dans son dispositif pour son convoyage individuel.

La peseuse associative peut par ailleurs être configurée pour sélectionner une sous-pluralité de champignons parmi la pluralité de champignons pesés par la pluralité de balances afin de remplir un dispositif de conditionnement spécifique.

Le deuxième robot préhenseur de conditionnement peut être adapté pour saisir la sous-pluralité de champignons sélectionnée par la peseuse associative et déposer cette sous-pluralité dans le dispositif de conditionnement spécifique.

Optionnellement, le deuxième robot préhenseur peut présenter une sous-pluralité de ventouses pneumatiques adaptées pour saisir la sous-pluralité de champignons par leur chapeau lorsqu'ils sont positionnés dans leur dispositif pour leur convoyage individuel. Dans cette option, le deuxième robot préhenseur peut également être configuré pour déposer la sous-pluralité de champignons saisie dans le dispositif de conditionnement de sorte que les chapeaux des champignons soient orientés sensiblement vers une direction opposée à un fond du dispositif de conditionnement spécifique.

Optionnellement, le système adapté pour convoyer des champignons peut en outre comprendre :
- un deuxième convoyeur adapté pour transporter des champignons depuis une chambre de culture de champignons vers la zone de chargement du premier convoyeur ;
- un robot préhenseur de positionnement adapté pour saisir un champignon transporté par le deuxième convoyeur et positionner ce champignon dans un dispositif pour son convoyage individuel positionné sur le premier convoyeur ; et
- une caméra configurée pour sélectionner des champignons à saisir par le robot préhenseur de positionnement, la sélection étant opérée à partir d'au moins l'un parmi une forme et une couleur du chapeau des champignons.
Dans cette option, le premier convoyeur peut comprendre une pluralité de bandes transporteuses, des bandes porteuses étant associées à un intervalle de calibres de champignon ; la caméra peut également configurée pour déterminer les calibres des champignons ; et le système peut en outre comprendre un élément de guidage configuré pour guider un dispositif pour le convoyage individuel d'un champignon accueillant un champignon d'un calibre spécifique déterminé par la caméra vers une bande transporteuse du premier convoyeur associée à un intervalle de calibres comprenant le calibre spécifique.

Optionnellement, le deuxième convoyeur est un convoyeur à bande comprenant une bande présentant des orifices, chaque orifice permettant d'accueillir un champignon en insérant le champignon dans l'orifice par le pied.

La demande porte également sur un procédé de convoyage d'un champignon selon la revendication 11.

Optionnellement, la mise en place d'un champignon dans la chambre du dispositif pour le convoyage individuel d'un champignon est réalisée par un robot préhenseur.

La demande porte par ailleurs sur une utilisation d'un convoyeur pour convoyer des champignons selon la revendication 13.
La présente divulgation propose donc un dispositif pour le convoyage individuel d'un champignon stable, sûr, et rapide qui permet de préserver la qualité du champignon pendant son convoyage. Ce dispositif peut faire partir d'un système automatisé, réduisant l'intervention humaine dans la chaine de traitement des champignons, qui se propose notamment de refroidir les champignons durant leur convoyage, afin notamment de ralentir les réactions enzymatiques auxquelles ils sont soumis dès leur convoyage. Ce refroidissement en amont du conditionnement permet par ailleurs de pouvoir conditionner les champignons lorsqu'il présente leur poids réduit, ce qui réduit l'énergie demandée aux robots préhenseur pour les saisir et les positionner dans les dispositifs de conditionnement, ce qui permet de contrôler le remplissage des dispositifs de conditionnement au poids de manière précise, et ce qui permet par ailleurs de réduire voire de supprimer les dégradations des dispositifs de conditionnement dues à l'humidité générée par certains dispositifs de refroidissements pour refroidir les champignons.

### Brève description des dessins

D'autres caractéristiques, détails et avantages apparaîtront à la lecture de la description détaillée ci-après, et à l'analyse des dessins annexés, sur lesquels :
**Fig. 1**

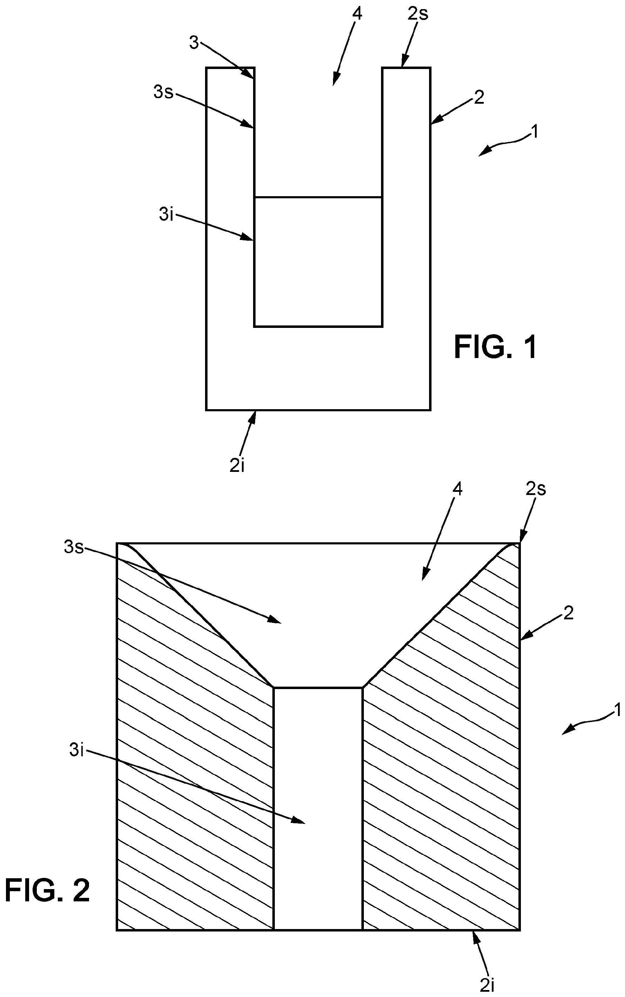

   [Fig. 1] représente schématiquement un exemple de dispositif pour le convoyage individuel d'un champignon.
**Fig. 2**
   [Fig. 2] représente schématiquement une vue en coupe d'un exemple de dispositif pour le convoyage individuel d'un champignon.
**Fig. 3**

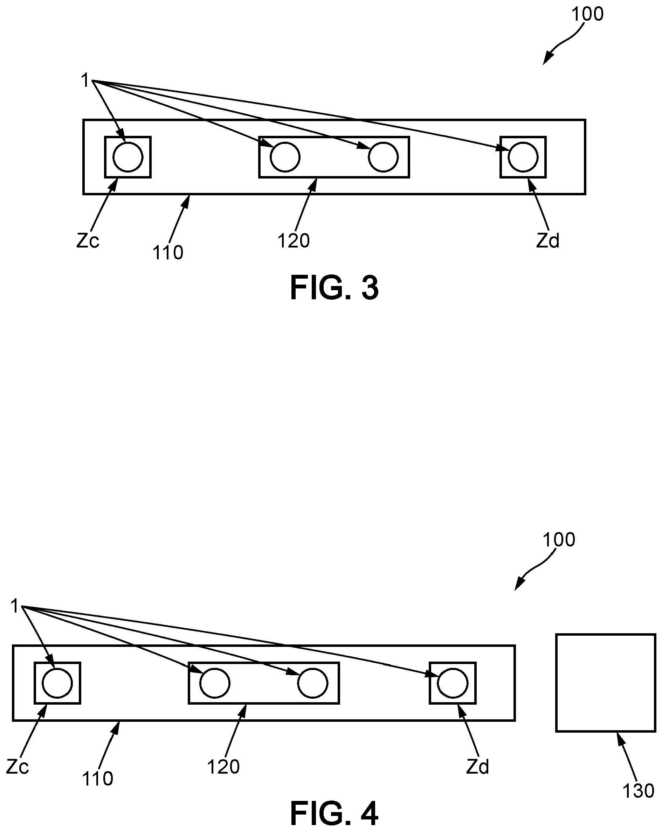

   [Fig. 3] représente schématiquement un exemple de système adapté pour convoyer des champignons dans des dispositifs pour le convoyage individuel de champignon.
**Fig. 4**
   [Fig. 4] représente schématiquement un premier exemple de système adapté pour convoyer et conditionner des champignons.
**Fig. 5**

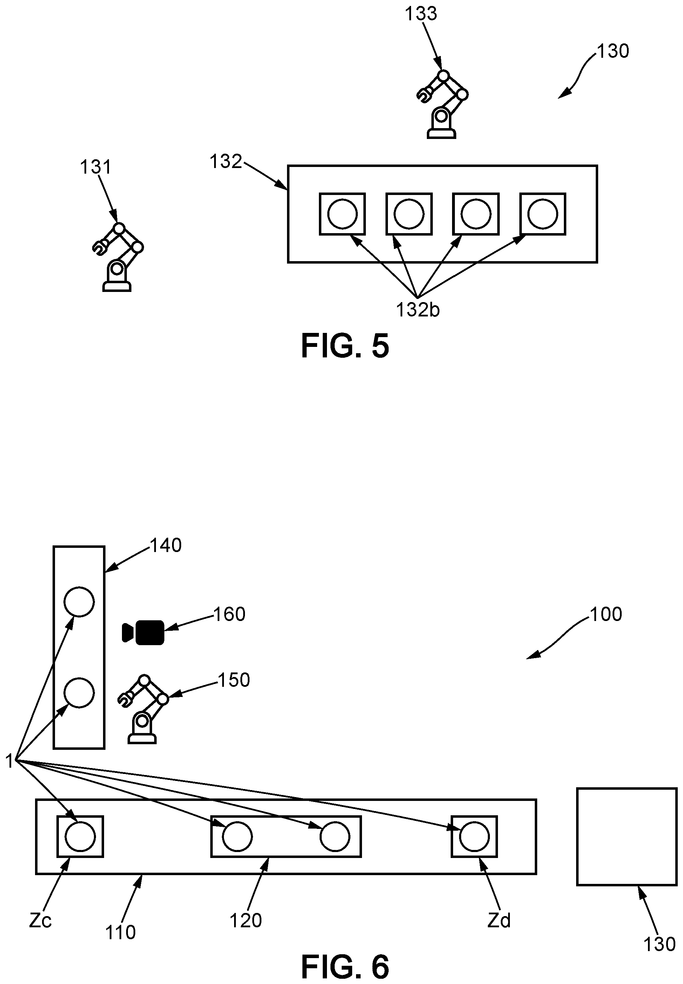

   [Fig. 5] représente schématiquement un exemple de dispositif de conditionnement.
**Fig. 6**
   [Fig. 6] représente schématiquement un deuxième exemple de système adapté pour convoyer et conditionner des champignons.
**Fig. 7**

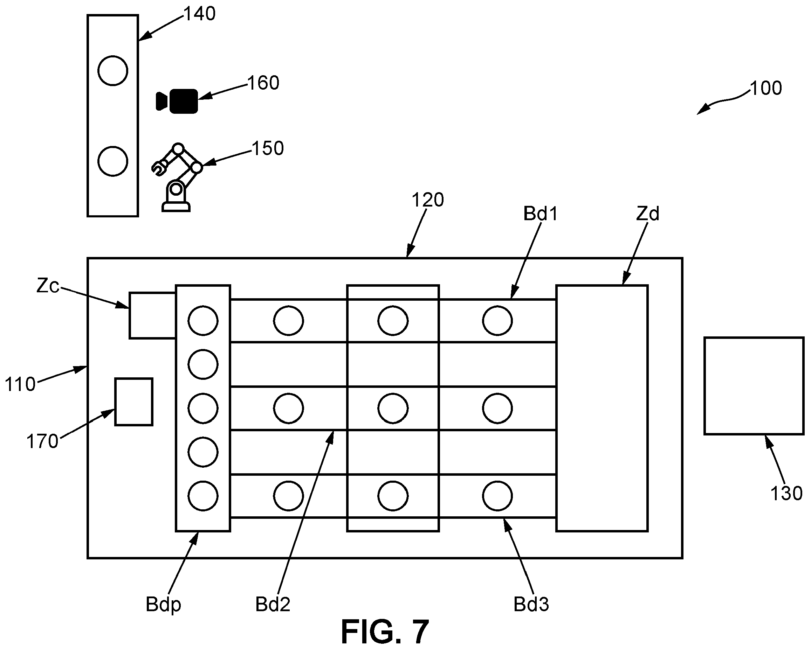

   [Fig. 7] représente schématiquement un troisième exemple de système adapté pour convoyer et conditionner des champignons.
**Fig. 8**

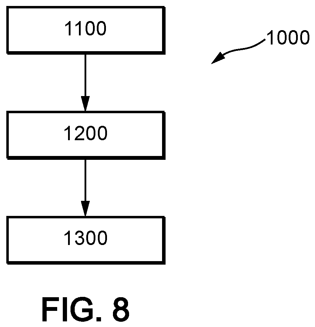

   [Fig. 8] représente schématiquement un exemple de procédé de convoyage d'un champignon.

### Description des modes de réalisation

Il est maintenant décrit en référence à la figure 1 un exemple de dispositif 1 pour le convoyage individuel d'un champignon. Le dispositif 1 pour le convoyage individuel d'un champignon selon la présente divulgation est tel qu'il permet le convoyage d'un champignon, de manière individuelle, en protégeant efficacement ce champignon de sorte que le champignon peut être déplacé rapidement. Par ailleurs, le dispositif présenté permet une manipulation facilitée du champignon par des moyens automatiques, tels que des robots préhenseurs, ce qui permet de réduire le recours au travail manuel dans les opérations de convoyage et de conditionnement des champignons.

Le dispositif 1 pour le convoyage individuel d'un champignon selon la présente divulgation correspond à un support pour le transport d'un champignon individuel par un convoyeur. Le dispositif 1 pour le convoyage individuel peut par exemple correspondre à un palet pour le convoyage individuel, parfois également désigné en français par rondelle porteuse ou par godet de transport. Le palet est une traduction littérale de la terminologie anglaise « puck », qui désigne des dispositifs pour le convoyage individuel de produits fragiles, sur des lignes de productions, notamment dans l'industrie pharmaceutique ou la parfumerie.

Ainsi, le dispositif 1 pour le convoyage individuel d'un champignon comprend un corps de convoyage 2 présentant une chambre 3 destinée à accueillir au moins partiellement le champignon. Le corps de convoyage 2 comprend une surface supérieure 2s et une surface inférieure 2i. La surface inférieure 2i est opposée à la surface supérieure 2s. La surface inférieure 2i du corps de convoyage 2 est destinée à entrer en contact avec une bande transporteuse d'un convoyeur de façon à permettre l'entrainement du dispositif 1 pour le convoyage individuel d'un champignon par friction. Par conséquent, la surface supérieure 2s du corps de convoyage 2 est destinée à être orientée vers le haut lorsque le dispositif 1 pour le convoyage individuel du champignon est positionné de manière adéquate sur un convoyeur.

La surface supérieure 2s du corps de convoyage 2 comprend un orifice 4 permettant l'insertion du champignon dans la chambre 3. Le bord de l'orifice 4 délimite à ce titre une extrémité supérieure de la chambre 3.

La chambre 3 comprend une partie supérieure 3s conformée pour accueillir au moins partiellement un chapeau du champignon. La partie supérieure 3s de la chambre 3 s'étend depuis l'orifice 4 de la surface supérieure 2s vers la surface inférieure 2i du corps de convoyage 2 du dispositif 1 pour le convoyage individuel du champignon.

La chambre 3 comprend également une partie inférieure 3i conformée pour accueillir un pied de champignon. La partie inférieure 3i de la chambre 3 s'étend depuis la partie supérieure de la chambre 3s vers la surface inférieure 2s du corps de convoyage 2.

Dans des exemples, la partie supérieure 3s de la chambre 3 peut présenter une forme tronconique dont l'extrémité présentant le plus petit diamètre est positionnée à l'opposé de l'orifice 4 de la surface supérieure 2s du corps de convoyage. En l'occurrence, un tronc de cône, par définition, comprend une première extrémité présentant un diamètre plus grand qu'une deuxième extrémité. Par ailleurs, dans les exemples dans lesquels la partie supérieure 3s de la chambre 3 peut présenter une forme tronconique, la partie inférieure 3i de la chambre 3 peut s'étendre depuis le tronc de cône de la partie supérieure 3s de la chambre 3 vers la surface inférieure 2i du corps de convoyage 2. Dans ces exemples, la partie supérieure 3s de la chambre 3 présente ainsi une forme épousant au moins partiellement la forme d'un chapeau de champignon, améliorant ainsi la protection et le maintien du champignon dans la chambre pendant son convoyage, ce qui peut permettre d'augmenter la vitesse de déplacement du champignon lors de son convoyage. Notamment, en cas de collision du dispositif pour le convoyage individuel du champignon pendant son déplacement, la forme tronconique de la partie supérieure de la chambre permettra d'aider au maintien du champignon dans le dispositif 1.

Dans les exemples dans lesquels la partie supérieure 3s de la chambre 3 présente une forme tronconique, la partie supérieure 3s de la chambre 3 peut présenter les caractéristiques suivantes :
- une distance séparant les extrémités du tronc de cône selon l'axe de révolution du tronc de cône est comprise entre 20 et 50 millimètres ;
- un diamètre maximal du tronc de cône est compris entre 90 et 110 millimètres ; et
- un diamètre minimal du tronc de cône est compris entre 12 et 32 millimètres.
Ces caractéristiques correspondent à des dimensions de la partie supérieure 3s de la chambre 3 permettant d'avoir une quantité de matière utilisée réduite, réduisant ainsi le coût de fabrication du dispositif, tout en permettant d'accueillir la quasi-totalité des calibres des chapeaux de champignons de Paris. Ces exemples sont donc particulièrement adaptés au convoyage d'un champignon de Paris et notamment à la protection et au maintien de son chapeau lors du convoyage.

Dans des exemples, la partie inférieure 3i de la chambre 3 peut présenter une forme cylindrique circulaire, c'est-à-dire présenter une forme de cylindre dont la base présente une forme de cercle. Dans ces exemples, la partie inférieure 3i de la chambre 3 présente ainsi une forme entourant au moins partiellement la forme d'un pied de champignon, améliorant de ce fait la protection et le maintien du champignon dans la chambre pendant son convoyage, ce qui peut permettre d'augmenter la vitesse de déplacement du champignon lors de son convoyage. Par exemple, en cas de collision du dispositif pour le convoyage individuel du champignon pendant son déplacement, la forme cylindrique circulaire de la partie inférieure de la chambre permettra d'aider au maintien du champignon dans le dispositif 1.

Dans les exemples dans lesquels la partie inférieure 3i de la chambre 3 présente une forme cylindrique circulaire, la partie inférieure 3i de la chambre 3 peut présenter les caractéristiques suivantes :
- une distance séparant les extrémités du cylindre selon l'axe de révolution du cylindre est comprise entre 40 et 80 millimètres ; et
- un diamètre du cylindre, i.e. de sa base de forme circulaire, est compris entre 12 et 32 millimètres.
Ces caractéristiques correspondent à des dimensions de la partie inférieure 3i de la chambre 3 permettant d'avoir une quantité de matière utilisée réduite, réduisant ainsi le coût de fabrication du dispositif, tout en permettant d'accueillir la quasi-totalité des calibres de pieds de champignons de Paris. Ces exemples sont donc particulièrement adaptés au convoyage d'un champignon de Paris et notamment à la protection et au maintien de son pied lors du convoyage.

Un exemple de dispositif 1 pour le convoyage individuel d'un champignon comprenant un corps de convoyage 2 et une chambre 3 présentant :
- une partie supérieure 3s présentant une forme tronconique dont l'extrémité présentant le plus petit diamètre est positionnée à l'opposé de l'orifice de la surface supérieure du corps de convoyage ; et
- une partie inférieure 3i s'étendant depuis le tronc de cône vers la surface inférieure 2s du corps de convoyage 2 et présentant une forme cylindrique circulaire ;
est représenté sur la figure 2, en coupe transversale selon un plan comprenant l'axe de révolution du cylindre.

Dans des exemples, le corps de convoyage 2 présente une forme extérieure cylindrique circulaire. Cette forme extérieure du corps de convoyage 2 du dispositif 1 pour le convoyage individuel d'un champignon permet de protéger le champignon durant son convoyage en cas de chocs, et donc permet d'augmenter la vitesse de déplacement du champignon lors du convoyage. En effet, une telle forme extérieure permet une absorption des chocs efficace, notamment en cas de collision avec un autre dispositif de ce type, ou en cas de collision avec une surface du convoyeur lors du convoyage. Ces exemples peuvent donc permettre d'augmenter la vitesse de déplacement du champignon pendant son convoyage en conservant un risque raisonnable quant à une perte de qualité du champignon en cas de chocs.

Les exemples de dispositif 1 pour le convoyage d'un champignon selon la présente divulgation permettent donc un convoyage sûr du champignon, c'est-à-dire un convoyage préservant la qualité du champignon, notamment en cas de collisions avec des surfaces du convoyeur ou avec d'autres dispositifs pour le convoyage de champignons. Par ailleurs, le dispositif selon la présente divulgation permet également un convoyage stable et rapide du champignon dès lors que le champignon est bien protégé lors de son convoyage. Le dispositif 1 selon la présente divulgation permet par conséquent d'augmenter la rapidité du processus de traitement industriel des champignons d'une usine de production de champignons. Il est également à noter que le positionnement du champignon dans le dispositif 1 selon la présente divulgation permet sa préhension directe, par exemple par un robot préhenseur, depuis le dispositif pour son convoyage, dans une position dans laquelle le chapeau est en haut et le pied est en bas. Cette position est une position avantageuse sur le plan commercial pour le conditionnement du champignon. En effet, la position des champignons dans les dispositifs de conditionnement, par exemple des barquettes, dans lesquels ces champignons sont vendus, est importante sur le plan commercial et un consommateur de champignons achètera plus facilement une barquette de champignons lorsque les champignons visibles de la barquette de champignons sont présentés avec le chapeau en haut et le pied en bas. Par conséquent, le fait que le champignon présente une telle position dans le dispositif pour son convoyage permet d'éviter d'autres manipulations ultérieures du champignon au moment de son conditionnement pour accorder cette position à une position préférentielle sur le plan commercial et permet notamment d'utiliser des robots préhenseurs à ventouses pour saisir le champignon, comme expliqué dans la suite.

En référence aux figures 3, 4, 6 et 7, sont désormais présentés des exemples de systèmes 100 adaptés pour convoyer des champignons dans des dispositifs pour le convoyage individuel de champignon. Dans certains exemples, notamment ceux représentés en figures 4, 6, et 7, les systèmes 100 peuvent également être adaptés pour conditionner des champignons.

Le système 100 peut comprendre un premier convoyeur 110. Le premier convoyeur 110 présente une bande transporteuse (non représentée) adaptée pour transporter des champignons dans des dispositifs 1 pour le convoyage individuel d'un champignon selon la présente divulgation entre une zone de chargement Zc et une zone de déchargement Zd. Dans des exemples, le premier convoyeur 110 est un convoyeur à chaine, c'est-à-dire un convoyeur présentant une bande transporteuse entrainée par une chaine, par exemple une chaine en matière synthétique.

Comme expliqué précédemment, les dispositifs pour le convoyage individuel d'un champignon sont par exemple transportés entre la zone de chargement Zc et la zone de déchargement Zd par friction entre la surface inférieure 2i de leur corps de convoyage 2 et la surface correspondante de la bande transporteuse en contact avec cette surface inférieure 2i.

La zone de chargement Zc désigne une zone du premier convoyeur 110 dans laquelle les champignons sont positionnés individuellement dans un dispositif 1 pour le convoyage de la présente divulgation. La zone de déchargement Zd désigne une zone du premier convoyeur 110 dans laquelle les champignons sont retirés du dispositif 1 pour leur convoyage afin d'être positionnés dans des dispositifs de conditionnement.

Le système 100 peut également comprendre une pluralité de dispositifs 1 pour le convoyage individuel d'un champignon selon l'un quelconque des exemples de ce type de dispositifs décrits dans la présente divulgation. Des exemples de ces dispositifs 1 ont notamment été décrits précédemment en référence aux figures 1 et 2.

Le système 100 peut comprendre un dispositif de refroidissement 120 positionné entre la zone de chargement Zc et la zone de déchargement Zd du premier convoyeur 110. Le dispositif de refroidissement 120 est adapté pour refroidir les champignons lorsqu'ils sont positionnés respectivement dans leur dispositif de convoyage individuel 1, lors de leur transport entre la zone de chargement Zc et la zone de déchargement Zd du premier convoyeur 110. Dans des exemples, le dispositif de refroidissement 130 peut comprendre un réfrigérateur et un ventilateur, le ventilateur étant orienté de façon à souffler de l'air, refroidi par le réfrigérateur, sur les dispositifs 1 pour le convoyage individuel de champignon lors de leur transport.

Le système de convoyage 100 selon la présente divulgation permet de convoyer des champignons de manière rapide, stable, et sûre entre une zone de chargement et une zone de déchargement d'un convoyeur, à l'aide des dispositifs 1 pour le convoyage individuel d'un champignon présentés par la présente divulgation.

Par ailleurs, le fait de positionner le dispositif de refroidissement entre la zone de chargement et la zone de déchargement du convoyeur permet de refroidir les champignons relativement tôt dans le processus industriel de traitement des champignons pour leur commercialisation, ce qui permet de conserver leur qualité plus longtemps en ralentissant les réactions enzymatiques auxquels ils sont soumis. Notamment, le refroidissement des champignons est effectué avant leur positionnement dans des dispositifs de conditionnement. Le refroidissement des champignons entraine une perte de poids des champignons, de sorte que refroidir les champignons après leur mise en place dans les dispositifs de conditionnement entraine une diminution du poids des dispositifs de conditionnement. Or, un dispositif de conditionnement de champignons, pour être commercialisé, doit atteindre un poids cible minimum. Le fait de refroidir les champignons avant leur conditionnement permet donc de contrôler le remplissage des dispositifs de conditionnement pour atteindre ce poids cible directement plutôt que de devoir corriger, *a posteriori,* une perte de poids des dispositifs de conditionnement due aux refroidissements des champignons, qui pourrait par exemple faire passer certains dispositifs de conditionnement en deçà du poids cible requis. Par ailleurs, ce n'est pas une solution satisfaisante que de surcharger les dispositifs de conditionnement de champignons, *a priori,* de façon à anticiper la perte de poids des champignons due à leur refroidissement, *a posteriori,* dans la mesure où le contrôle du poids des dispositifs de conditionnement restera sensiblement moins précis que celui opéré directement par le remplissage des dispositifs de conditionnement à partir des champignons refroidis. Enfin, il faut également noter que lorsque les dispositifs de conditionnement sont des dispositifs de conditionnement sensibles à l'humidité, par exemple lorsqu'il s'agit de barquettes en carton, les dispositifs de conditionnement absorbent l'humidité émise par les dispositifs de refroidissement des champignons, ce qui peut les dégrader. Le fait de refroidir les champignons en amont de leur conditionnement permet donc d'utiliser des dispositifs de conditionnement sensibles à l'humidité en réduisant voire en supprimant une dégradation de ces dispositifs de conditionnement causée par l'humidité.

Dans des exemples, le système 100 peut comprendre un dispositif de remplissage 130 configuré pour remplir les dispositifs de conditionnement avec des champignons. Un tel exemple de système 100 est représenté schématiquement en figure 4.

Le dispositif de remplissage 130 peut comprendre un premier robot préhenseur de conditionnement 131 adapté pour saisir un champignon depuis un dispositif pour le convoyage individuel d'un champignon puis positionner ce champignon dans un dispositif de conditionnement.

Un robot préhenseur correspond à un robot permettant de saisir un ou plusieurs éléments à une première position et placer ce ou ces éléments à une deuxième position. Ce type de robots est généralement désigné par la terminologie anglaise « pick and place robot ». Il est fait mention, dans la présente divulgation de « robot préhenseur de positionnement » et de « robot préhenseur de conditionnement ». Ces deux terminologies sont simplement utilisées comme des étiquettes pour distinguer à quel endroit de la chaine de traitement des champignons intervient le robot préhenseur. Toutefois, ces deux appellations désignent fonctionnellement un même type de dispositif, i.e. un robot préhenseur.

Un dispositif de conditionnement pour champignons peut notamment correspondre à une barquette, par exemple en matière synthétique ou en carton, à une caisse pour la vente de champignons en vrac, ou à un sachet, par exemple un sachet en plastique ou en papier kraft.

Dans des exemples, le dispositif de remplissage 130 peut comprendre une peseuse associative 132. Une peseuse associative désigne un dispositif utilisé pour peser des produits dans le but de les regrouper ou de les combiner en fonction de leur poids.

Dans des exemples, la peseuse associative 132 peut comprendre une pluralité de balances 132b. Chaque balance 132b de la pluralité de balances 132b peut être configurée pour peser respectivement un champignon lorsque ce champignon est positionné dans son dispositif pour son convoyage individuel. Dans cette mesure, des dispositifs pour le convoyage individuel de champignons peuvent être transportés par le premier convoyeur 110 vers la pluralité de balances 132b et positionnés de façon à être pesés individuellement par une balance 132b. En soustrayant le poids du dispositif 1 pour le convoyage individuel d'un champignon au poids mesuré, la balance peut donc déterminer le poids du champignon positionné dans le dispositif 1. La peseuse associative 132 peut par ailleurs être configurée pour sélectionner une sous-pluralité de champignons parmi la pluralité de champignons pesés par la pluralité de balances afin de remplir un dispositif de conditionnement spécifique.

Dans des exemples dans lesquels le dispositif de conditionnement 130 comprend la peseuse associative 132, le dispositif de conditionnement 130 peut en outre comprendre un deuxième robot préhenseur de conditionnement 133. Le deuxième robot préhenseur de conditionnement 133 peut être adapté pour saisir la sous-pluralité de champignons sélectionnée par la peseuse associative 132 et déposer la sous-pluralité de champignons sélectionnée dans le dispositif de conditionnement spécifique.

Un dispositif de remplissage 130 comprenant le premier robot préhenseur de conditionnement 131, la peseuse associative 132 et le deuxième robot préhenseur de conditionnement 133 est représenté schématiquement en figure 5.

Ainsi, dans des exemples dans lesquels le dispositif de remplissage 130 comprend le premier robot préhenseur de conditionnement 131, la peseuse associative 132 et le deuxième robot préhenseur de conditionnement 133, le remplissage d'un dispositif de conditionnement spécifique pour qu'il atteigne un poids cible prédéterminé peut être effectué de la façon suivante. Dans un premier temps, le premier robot préhenseur de conditionnement 131 positionne un nombre de champignons prédéterminé dans le dispositif de conditionnement spécifique. Il s'agit de procéder à un premier remplissage du dispositif de conditionnement spécifique qui ne se préoccupe pas précisément du poids final du dispositif de conditionnement. Notamment, le nombre de champignons positionnés par le premier robot préhenseur de conditionnement 131 dans le dispositif de conditionnement spécifique peut être prédéterminé de façon à s'assurer que le poids combiné de ces champignons soit toujours strictement inférieur au poids cible prédéterminé du dispositif de remplissage de conditionnement une fois rempli. Dans un deuxième temps, la peseuse associative 132 sélectionne une sous-pluralité de champignons parmi la pluralité de champignons pesés par la pluralité de balances 132b de façon à ce que le dispositif de conditionnement spécifique, déjà en partie prérempli par le premier robot préhenseur 131, atteigne le poids cible prédéterminé pour sa commercialisation avec l'objectif de le dépasser le moins possible. Pour le producteur, chaque gramme supplémentaire au-dessus du poids cible correspond à une perte financière puisque les dispositifs de conditionnement sont vendus en considérant qu'ils pèsent le poids cible, par exemple un poids de 250 grammes ou de 500 grammes pour une barquette. Par conséquent, la peseuse associative choisit la meilleure combinaison de champignons qui, lorsqu'ils seront ajoutés au dispositif de conditionnement spécifique prérempli par le premier robot préhenseur de conditionnement 131, permet au dispositif de conditionnement spécifique d'atteindre un poids supérieur au poids cible prédéterminé pour sa commercialisation en s'en éloignant le moins possible. Enfin, dans un troisième temps, le deuxième robot préhenseur de conditionnement 133 est adapté pour saisir la sous-pluralité de champignons sélectionnée par la peseuse associative 132 et déposer la sous-pluralité de champignons sélectionnée dans le dispositif de conditionnement spécifique. De cette façon, le remplissage d'un dispositif de conditionnement peut être effectué automatiquement de manière extrêmement précise.

Dans des exemples, le deuxième robot préhenseur 133 du dispositif de conditionnement 130 peut présenter une sous-pluralité de ventouses pneumatiques adaptées pour saisir la sous-pluralité de champignons par leur chapeau lorsqu'ils sont positionnés dans leur dispositif pour leur convoyage individuel. Le deuxième robot préhenseur 133 peut, de cette façon, être configuré pour déposer la sous-pluralité de champignons dans le dispositif de conditionnement de sorte que les chapeaux des champignons soient orientés sensiblement vers une direction opposée à un fond du dispositif de conditionnement spécifique, ce qui signifie que les pieds des champignons, lorsqu'ils n'ont pas été coupés au préalable, sont orientés vers le fond du fond du dispositif de conditionnement spécifique. Comme expliqué précédemment, la position des champignons dans les dispositifs de conditionnement dans lesquels ces champignons sont vendus, est importante sur le plan commercial, en particulier pour ce qui concerne les barquettes. Un consommateur de champignons achètera plus facilement une barquette de champignons lorsque les champignons visibles de la barquette de champignons sont présentés avec le chapeau en haut et le pied en bas. Ici, dans la mesure où la sous-pluralité de champignons saisie par le deuxième robot préhenseur de conditionnement 133 va venir finir le remplissage du dispositif de conditionnement, cette sous-pluralité sera placée en surface du dispositif de conditionnement de sorte qu'il s'agira vraisemblablement des produits du dispositif de conditionnement les plus visibles pour le consommateur, parmi les produits contenus dans le dispositif de conditionnement, et la configuration du deuxième robot préhenseur de conditionnement 133 permet donc de positionner cette sous-pluralité dans le dispositif de conditionnement de façon attractive pour le consommateur.

Dans des exemples, le système 100 peut en outre comprendre un deuxième convoyeur 140. Le deuxième convoyeur 140 est adapté pour transporter des champignons depuis une chambre de culture de champignons (non représentée) vers la zone de chargement Zc du premier convoyeur 110. Dans des exemples, le deuxième convoyeur 140 peut être un convoyeur à bande. Le convoyeur à bande comprend une bande présentant des orifices. Chaque orifice permet d'accueillir un champignon en insérant le champignon dans l'orifice par le pied. De cette façon, les cueilleurs de champignons, positionnés au niveau de la chambre de culture, peuvent insérer le champignon dans un orifice de la bande et ces champignons sont amenés de manière automatique jusqu'au premier convoyeur pour être placés dans les dispositifs pour leur convoyage individuel.

Dans des exemples dans lesquels le système 100 comprend le deuxième convoyeur 140, le système 100 peut également comprendre un robot préhenseur de positionnement 150. Le robot préhenseur de positionnement 150 est adapté pour saisir un champignon transporté par le deuxième convoyeur 140 et positionner ce champignon dans un dispositif pour son convoyage individuel positionné sur le premier convoyeur 110. Le dispositif 1 pour le convoyage individuel d'un champignon est par exemple positionné dans la zone de chargement Zc du premier convoyeur 110 lors de cette action. Le robot préhenseur de positionnement 150 permet donc de positionner automatiquement les champignons dans leur dispositif de convoyage individuel. Dès lors, le système 100 permet un traitement automatisé des champignons, depuis le deuxième convoyeur 140 à proximité immédiate de la chambre de culture jusqu'au conditionnement, réduisant ainsi le besoin d'intervention humaine le long de la chaine de traitement des champignons, et permettant donc un rendement accru de l'usine de production de champignons.

Dans des exemples dans lesquels le système 100 comprend le deuxième convoyeur 140 et le robot préhenseur de positionnement 150, le système 100 peut également comprendre une caméra 160. Un tel exemple de système est représenté schématiquement en figure 6.

La caméra 160 est configurée pour sélectionner des champignons à saisir par le robot préhenseur de positionnement 150. La sélection est opérée à partir d'au moins l'un parmi une forme et une couleur du chapeau des champignons. Parmi les champignons convoyés par le deuxième convoyeur 140, tous ne sont pas nécessairement consommables et/ou commercialisables. La caméra permet ainsi de sélectionner les champignons à conditionner, qui sont placés sur les dispositifs 1 pour leur convoyage individuel et convoyés, par le premier convoyeur 110, jusqu'à la zone de déchargement Zd pour leur conditionnement.

Dans des exemples, la caméra 160 sélectionne un champignon spécifique lorsqu'au moins une des conditions suivantes est vérifiée :
- la forme du chapeau du champignon spécifique présente un écart inférieur à un seuil prédéterminé avec une forme prédéfinie ; et
- des pixels appartenant au chapeau du champignon spécifique présentent une couleur différente de couleurs prédéfinies comme étant non sélectionnables.

Des couleurs prédéfinies comme étant non sélectionnables peuvent par exemple comprendre au moins l'une parmi la couleur jaune et la couleur noire. Il s'agit de couleurs indiquant que la qualité du champignon ne lui permet pas d'être consommé et/ou commercialisé.

Dans des exemples dans lesquels le système 100 comprend le deuxième convoyeur 140, le robot préhenseur de positionnement 150, et la caméra 160, le premier convoyeur 110 peut comprendre une pluralité de bandes transporteuses et le système 100 peut en outre comprendre un élément de guidage 170. Un tel exemple de système est représenté schématiquement en figure 7. Sur cette figure, la pluralité de bandes transporteuses est constituée, à titre illustratif uniquement, de trois bandes transporteuses référencées Bd1, Bd2 et Bd3. Dans ces exemples, des bandes transporteuses parmi la pluralité de bandes transporteuses peuvent être associées à un intervalle de calibres de champignon. La caméra 160 peut ainsi être configurée pour déterminer les calibres des champignons. Le premier élément de guidage 170 est alors configuré pour guider un dispositif pour le convoyage individuel d'un champignon accueillant un champignon d'un calibre spécifique déterminé par la caméra vers une bande transporteuse Bd du premier convoyeur 110 associée à un intervalle de calibres comprenant le calibre spécifique. En l'occurrence, ces exemples de systèmes 100 permettent de guider les dispositifs pour le convoyage individuel de champignons vers des bandes transporteuses qui sont associées aux calibres du champignon qu'ils accueillent. Par conséquent, un traitement différencié peut être effectué en fonction du calibre du champignon, notamment pour le conditionnement du champignon. Par exemple, en fonction du calibre du champignon, le dispositif de conditionnement dans lequel le champignon va être positionné après son convoyage peut être différent de sorte que les dispositifs pour le convoyage individuel de champignons présentant des calibres différents devront par exemple être convoyés vers une partie différente de la zone de déchargement Zd du premier convoyeur 110, ce qui est permis par l'utilisation de plusieurs bandes transporteuses. Dans des exemples, le premier convoyeur 110 peut comprendre une bande transporteuse partagée depuis laquelle les dispositifs pour le convoyage individuel de champignons sont guidés vers la bande transporteuse associée respectivement au calibre du champignon qu'il contienne. Cette bande transporteuse partagée est référencée Bdp sur la figure 7. Elle communique par exemple avec la zone de chargement Zc dans laquelle les champignons peuvent être positionnés, via le robot préhenseur de positionnement 150, dans des dispositifs 1 pour leur convoyage individuel.

En référence à la figure 8 est désormais présenté un exemple de procédé 1000 de convoyage d'un champignon.

Comme illustré sur la figure 8, le procédé 1000 comprend une opération 1100 de mise en place d'un champignon dans la chambre d'un dispositif 1 pour le convoyage individuel d'un champignon selon l'un quelconque des exemples de ce type de dispositifs décrits dans la présente divulgation. Dans des exemples, la mise en place du champignon dans la chambre d'un dispositif 1 pour le convoyage individuel d'un champignon est réalisée à partir d'un robot préhenseur.

Comme illustré sur la figure 8, le procédé 1000 comprend une opération 1200 de positionnement du dispositif pour le convoyage individuel d'un champignon sur une bande transporteuse d'un convoyeur.

Comme illustré sur la figure 8, le procédé 1000 comprend une opération 1300 de convoyage du dispositif pour le convoyage individuel d'un champignon sur la bande transporteuse du convoyeur.

La présente divulgation porte également sur l'utilisation d'un convoyeur, par exemple un convoyeur à chaines, pour convoyer des champignons, dans laquelle chaque champignon est convoyé individuellement par l'un quelconque des exemples de ce type de dispositifs décrits dans la présente divulgation.

La présente divulgation propose donc un dispositif pour le convoyage individuel d'un champignon stable, sûr, et rapide qui permet de préserver la qualité du champignon pendant son convoyage. Ce dispositif peut faire partir d'un système automatisé, réduisant l'intervention humaine dans la chaine de traitement des champignons, qui se propose notamment de refroidir les champignons durant leur convoyage, afin notamment de ralentir les réactions enzymatiques auxquelles ils sont soumis dès leur convoyage. Ce refroidissement en amont du conditionnement permet par ailleurs de pouvoir conditionner les champignons lorsqu'il présente leur poids réduit, ce qui réduit l'énergie demandée aux robots préhenseur pour les saisir et les positionner dans les dispositifs de conditionnement, ce qui permet de contrôler le remplissage des dispositifs de conditionnement au poids de manière précise, et ce qui permet par ailleurs de réduire voire de supprimer les dégradations des dispositifs de conditionnement dues à l'humidité générée par certains dispositifs de refroidissements pour refroidir les champignons.

## Revendications

1. Dispositif (1) pour le convoyage individuel d'un champignon comprenant un corps de convoyage (2) présentant une chambre (3) destinée à accueillir au moins partiellement le champignon ;
dans lequel le corps de convoyage (2) comprend une surface supérieure (2s) et une surface inférieure (2i), opposée à la surface supérieure ;
la surface inférieure (2i) du corps de convoyage étant destinée à entrer en contact avec une bande transporteuse d'un convoyeur de façon à permettre l'entrainement du dispositif (1) pour le convoyage individuel du champignon par friction ;
la surface supérieure du corps de convoyage (2s) comprenant un orifice (4) permettant l'insertion du champignon dans la chambre et dont le bord délimite une extrémité supérieure de la chambre ;
la chambre (3) comprenant une partie supérieure (3s) s'étendant depuis l'orifice (4) de la surface supérieure (2s) du corps de convoyage (2) vers la surface inférieure (2i) du corps de convoyage (2) et étant conformée pour accueillir au moins partiellement un chapeau du champignon ; et
la chambre (3) comprenant une partie inférieure (3i) s'étendant depuis la partie supérieure (3s) de la chambre vers la surface inférieure (2i) du corps de convoyage (2) et étant conformée pour accueillir au moins partiellement un pied de champignon ;
la partie inférieure (3i) de la chambre (3) présentant une forme cylindrique circulaire, **caractérisé en ce que** une distance séparant les extrémités du cylindre selon l'axe de révolution du cylindre est comprise entre 40 et 80 millimètres ; et un diamètre du cylindre est compris entre 12 et 32 millimètres.

2. Dispositif pour le convoyage selon la revendication précédente, dans lequel la partie supérieure (3s) de la chambre (3) présente une forme tronconique dont l'extrémité présentant le plus petit diamètre est positionnée à l'opposé de l'orifice (4) de la surface supérieure (2s) du corps de convoyage (2), et dans lequel la partie inférieure (3i) de la chambre (3) s'étend depuis le tronc de cône vers la surface inférieure (2i) du corps de convoyage (2).

3. Dispositif pour le convoyage selon la revendication précédente, dans lequel :
- une distance séparant les extrémités du tronc de cône de la partie supérieure (3s) de la chambre (3) du corps de convoyage (2) selon l'axe de révolution du tronc de cône est comprise entre 20 et 50 millimètres ;
- un diamètre maximal du tronc de cône est compris entre 90 et 110 millimètres ; et
- un diamètre minimal du tronc de cône est compris entre 12 et 32 millimètres.

4. Système (100) adapté pour convoyer des champignons comprenant :
un premier convoyeur (110) présentant une bande transporteuse adaptée pour transporter des champignons entre une zone de chargement (Zc) des champignons dans des dispositifs (1) pour le convoyage individuel selon l'une quelconque des revendications 1 à 3 et une zone de déchargement (Zd) des champignons dans des dispositifs de conditionnement;
une pluralité de dispositifs (1) pour le convoyage individuel d'un champignon selon l'une quelconque des revendications 1 à 3 ; et
un dispositif de refroidissement (120) positionné entre la zone de chargement (Zc) et la zone de déchargement (Zd) et adapté pour refroidir les champignons lorsqu'ils sont positionnés respectivement dans leur dispositif (1) de convoyage individuel.

5. Système (100) selon la revendication précédente, également adapté pour conditionner des champignons, comprenant en outre un dispositif de remplissage (130) configuré pour remplir les dispositifs de conditionnement avec des champignons,
le dispositif de remplissage (130) comprenant un premier robot préhenseur de conditionnement (131), adapté pour saisir un champignon depuis un dispositif (1) pour le convoyage individuel d'un champignon puis positionner ce champignon dans un dispositif de conditionnement.

6. Système selon la revendication précédente, dans lequel le dispositif de remplissage (130) comprend également une peseuse associative (132) et un deuxième robot préhenseur de conditionnement (133) ;
la peseuse associative (132) comprenant une pluralité de balances (132b);
chaque balance (132b) de la pluralité de balances (132b) étant configurée pour peser respectivement un champignon lorsque ce champignon est positionné dans son dispositif (1) pour son convoyage individuel ;
la peseuse associative (132) étant configurée pour sélectionner une sous-pluralité de champignons parmi la pluralité de champignons pesés par la pluralité de balances (132b) afin de remplir un dispositif de conditionnement spécifique ; et
le deuxième robot préhenseur de conditionnement (133) étant adapté pour saisir la sous-pluralité de champignons sélectionnée et déposer cette sous-pluralité dans le dispositif de conditionnement spécifique.

7. Système selon la revendication précédente, dans lequel le deuxième robot préhenseur de conditionnement (133) présente une sous-pluralité de ventouses pneumatiques adaptées pour saisir la sous-pluralité de champignons par leur chapeau lorsqu'ils sont positionnés dans leur dispositif pour leur convoyage individuel, le deuxième robot préhenseur de conditionnement (133) étant configuré pour déposer la sous-pluralité de champignons dans le dispositif de conditionnement de sorte que les chapeaux des champignons soient orientés sensiblement vers une direction opposée à un fond du dispositif de conditionnement spécifique.

8. Système selon l'une quelconque des revendications 4 à 7 comprenant en outre :
- un deuxième convoyeur (140) adapté pour transporter des champignons depuis une chambre de culture de champignons vers la zone de chargement (Zc) du premier convoyeur (110) ;
- un robot préhenseur de positionnement (150) adapté pour saisir un champignon transporté par le deuxième convoyeur (140) et positionner ce champignon dans un dispositif pour son convoyage individuel positionné sur le premier convoyeur (110) ; et
- une caméra (160) configurée pour sélectionner des champignons à saisir par le robot préhenseur de positionnement (150), la sélection étant opérée à partir d'au moins l'un parmi une forme et une couleur du chapeau des champignons.

9. Système selon la revendication précédente, dans lequel le premier convoyeur (110) comprend une pluralité de bandes transporteuses (Bd), des bandes transporteuses (Bd) étant associées à un intervalle de calibres de champignon ;
dans lequel la caméra (160) est également configurée pour déterminer les calibres des champignons ; et
dans lequel le système (100) comprend en outre un élément de guidage (170) configuré pour guider un dispositif (1) pour le convoyage individuel d'un champignon accueillant un champignon d'un calibre spécifique déterminé par la caméra (160) vers une bande transporteuse (Bd) du premier convoyeur (110) associée à un intervalle de calibres comprenant le calibre spécifique.

10. Système selon l'une quelconque des revendications 8 ou 9, dans lequel le deuxième convoyeur (140) est un convoyeur à bande comprenant une bande présentant des orifices, chaque orifice permettant d'accueillir un champignon en insérant le champignon dans l'orifice par le pied.

11. Procédé (1000) de convoyage d'un champignon comprenant :
- une mise en place (1100) d'un champignon dans la chambre d'un dispositif (1) pour le convoyage individuel d'un champignon selon l'une quelconque des revendications 1 à 3 ;
- un positionnement (1200) du dispositif (1) pour le convoyage individuel d'un champignon sur une bande transporteuse d'un convoyeur ; et
- un convoyage (1300) du dispositif (1) pour le convoyage individuel d'un champignon sur la bande transporteuse du convoyeur.

12. Procédé selon la revendication précédente, dans lequel la mise en place (1100) d'un champignon dans la chambre du dispositif pour le convoyage individuel d'un champignon est réalisée par un robot préhenseur.

13. Utilisation d'un convoyeur pour convoyer des champignons, chaque champignon étant convoyé individuellement par un dispositif (1) pour le convoyage individuel d'un champignon selon l'une quelconque des revendications 1 à 3.

## Patentansprüche

1. Vorrichtung (1) zum individuellen Transport eines Pilzes, umfassend einen Transportkörper (2) mit einer Kammer (3) zur zumindest teilweisen Aufnahme des Pilzes;
wobei der Transportkörper (2) eine Oberseite (2s) und eine der Oberseite gegenüberliegende Unterseite (2i) umfasst;
wobei die Unterseite (2i) des Transportkörpers dazu bestimmt ist, mit einem Förderband eines Förderers in Kontakt zu kommen, um den Antrieb der Vorrichtung (1) zum individuellen Transport des Pilzes durch Reibung zu ermöglichen;
wobei die Oberseite des Transportkörpers (2s) eine Öffnung (4) zum Einführen des Pilzes in die Kammer aufweist, deren Rand ein oberes Ende der Kammer begrenzt;
wobei die Kammer (3) einen oberen Abschnitt (3s) umfasst, der sich von der Öffnung (4) der Oberseite (2s) des Transportkörpers (2) zur Unterseite (2i) des Transportkörpers (2) erstreckt und so geformt ist, dass sie zumindest teilweise eine Kappe des Pilzes aufnehmen kann; und
die Kammer (3) einen unteren Abschnitt (3i) umfasst, der sich vom oberen Abschnitt (3s) der Kammer zur unteren Fläche (2i) des Transportkörpers (2) erstreckt und so geformt ist, dass sie zumindest teilweise einen Pilzstiel aufnehmen kann;
wobei der untere Abschnitt (3i) der Kammer (3) eine kreiszylindrische Form aufweist, **dadurch gekennzeichnet, dass** ein Abstand, der die Enden des Zylinders entlang der Drehachse des Zylinders trennt, zwischen 40 und 80 Millimeter beträgt; und der Durchmesser des Zylinders zwischen 12 und 32 Millimetern liegt.

2. Vorrichtung gemäss dem vorstehenden Anspruch, wobei der obere Abschnitt (3s) der Kammer (3) eine kegelstumpfförmige Form aufweist, deren Ende mit dem kleinsten Durchmesser gegenüber der Öffnung (4) der Oberseite (2s) des Transportkörpers (2) positioniert ist, und wobei sich der untere Teil (3i) der Kammer (3) vom Kegelstumpf zur unteren Fläche (2i) des Transportkörpers (2) erstreckt.

3. Vorrichtung gemäss dem vorstehenden Anspruch, wobei:
der Abstand zwischen den Enden des Kegelstumpfes des oberen Abschnitts (3s) der Kammer (3) des Transportkörpers (2) entlang der Drehachse des Kegelstumpfes zwischen 20 und 50 Millimetern liegt;
der maximale Durchmesser des Kegelstumpfes zwischen 90 und 110 Millimetern liegt; und
der minimale Durchmesser des Kegelstumpfes zwischen 12 und 32 Millimetern liegt.

4. System (100) zum Transportieren von Pilzen, umfassend:
einen ersten Förderer (110) mit einem Förderband zum Transportieren von Pilzen zwischen einer Ladezone (Zc) zum Laden der Pilze in Vorrichtungen zum individuellen Transport von Pilzen gemäss einem der Ansprüche 1 bis 3 und einer Entladezone (Zd) zum Entladen der Pilze in Verpackungsvorrichtungen;
eine Vielzahl von Vorrichtungen (1) zum Fördern zum individuellen Transport von Pilzen gemäss einem der Ansprüche 1 bis 3; und
eine Kühlvorrichtung (120), die zwischen der Ladezone (Zc) und der Entladezone (Zd) angeordnet ist und zum Kühlen der Pilze ausgelegt ist, wenn die Pilze jeweils in ihrer Vorrichtung (1) positioniert sind.

5. System (100) gemäss dem vorstehenden Anspruch, das auch zum Verpacken von Pilzen geeignet ist und zusätzlich eine Füllvorrichtung (130) umfasst, die zum Befüllen von Verpackungsvorrichtungen mit Pilzen konfiguriert ist,
wobei die Füllvorrichtung (130) einen ersten Verpackungsgreifroboter (131) umfasst, der dazu ausgelegt ist, einen Pilz aus seiner Vorrichtung (1) zu greifen und diesen Pilz dann in einer Verpackungsvorrichtung zu positionieren.

6. System gemäss dem vorstehenden Anspruch, wobei die Füllvorrichtung (130) ausserdem eine Mehrkopfwaage (132) und einen zweiten Verpackungsgreifroboter (133) umfasst, wobei die Mehrkopfwaage (132) eine Vielzahl von Waagen (132b) umfasst;
jede Waage (132b) der Vielzahl der Waagen (132b) ist so konfiguriert, dass sie jeweils einen Pilz wiegt, wenn dieser Pilz in seiner Vorrichtung (1) für seinen individuellen Transport positioniert ist;
die Mehrkopfwaage (132) ist so konfiguriert, dass sie eine Untermenge von Pilzen aus der Vielzahl von Pilzen auswählt, die von der Vielzahl von Waagen (132b) gewogen wurden, um eine bestimmte Verpackungsvorrichtung zu befüllen; und
wobei der zweite Verpackungsgreifroboter (133) so ausgelegt ist, dass er die ausgewählte Untermenge von Pilzen greift und die Untermenge von Pilzen in die bestimmte Verpackungsvorrichtung ablegt.

7. System gemäss dem vorstehenden Anspruch, wobei der zweite Verpackungsgreifroboter (133) eine Untermenge von pneumatischen Saugnäpfen aufweist, die dazu ausgelegt sind, die Untermenge von Pilzen an ihren Kappen zu greifen, wenn die Pilze in ihrer jeweiligen Vorrichtung positioniert sind, wobei der zweite Verpackungsgreifroboter (133) so konfiguriert ist, dass er die Untermenge von Pilzen in die spezifische Verpackungsvorrichtung so ablegt, dass die Pilzkappen im Wesentlichen in Richtung entgegengesetzt zum Boden der spezifischen Verpackungsvorrichtung ausgerichtet sind.

8. System gemäss einem der Ansprüche 4 bis 7, zusätzlich umfassend:
einen zweiten Förderer (140), der dazu ausgelegt ist, Pilze von einer Pilzzuchtkammer zur Ladezone (Zc) des ersten Förderers (110) zu transportieren;
einen Positioniergreifroboter (150), der dazu ausgelegt ist, einen vom zweiten Förderer (140) transportierten Pilz zu greifen und diesen Pilz in einer Vorrichtung für seinen individuellen Transport zu positionieren, die auf dem ersten Förderer (110) positioniert ist; und
eine Kamera (160), die so konfiguriert ist, dass sie Pilze auswählt, die vom Positioniergreifroboter (150) gegriffen werden sollen, wobei die Auswahl anhand von mindestens einem der Merkmale Form oder Farbe der Pilzkappe erfolgt.

9. System gemäss dem vorstehenden Anspruch, wobei der erste Förderer (110) eine Vielzahl von Förderbändern (Bd) umfasst, wobei mindestens einige der Förderbänder (Bd) einem Pilzgrössenintervall zugeordnet sind;
wobei die Kamera (160) auch zum Bestimmen der Grösse von Pilzen konfiguriert ist; und wobei das System (100) ferner ein Führungselement (170) umfasst, das so konfiguriert ist, dass es eine Vorrichtung (1), die einen Pilz einer bestimmten Grösse hält, die von der Kamera (160) bestimmt wird, zu einem Förderband (Bd) des ersten Förderers (110) führt, das einem Grössenintervall zugeordnet ist, das die bestimmte Grösse umfasst.

10. System nach einem der Ansprüche 8 oder 9, wobei der zweite Förderer (140) ein Bandförderer ist, der ein Band mit Öffnungen umfasst, wobei jede Öffnung des Bandes einen Pilz aufnimmt, indem ein Stiel des Pilzes in die Öffnung eingeführt wird.

11. Verfahren (1000) zum Fördern eines Pilzes, umfassend:
Platzieren (1100) eines Pilzes in die Kammer einer Vorrichtung (1) gemäss einem der Ansprüche 1 bis 3;
Positionieren (1200) der Vorrichtung (1) auf einem Förderband eines Förderers; und
Fördern (1300) der Vorrichtung (1) zum individuellen Befördern eines Pilzes auf dem Förderband des Förderers.

12. Verfahren nach dem vorstehenden Anspruch, bei dem das Einlegen (1100) eines Pilzes in die Kammer der Vorrichtung zum individuellen Transport eines Pilzes durch einen Greifroboter erfolgt.

13. Verwendung eines Förderers zum Fördern von Pilzen, wobei jeder Pilz einzeln durch eine Vorrichtung (1) zum individuellen Befördern eines jeden Pilzes gemäss einem der Ansprüche 1 bis 3 gefördert wird.

## Claims

1. A conveying device (1) for conveying an individual mushroom, comprising a conveying body (2) having a chamber (3) intended to at least partially accommodate the mushroom;
wherein the conveying body (2) comprises an upper surface (2s) and a lower surface (2i) opposed to the upper surface;
the lower surface (2i) of the conveying body being configured to come into contact with a conveyor belt of a conveyor so as to allow the conveying device (1) to be carried along by friction in order to provide individual conveying of the mushroom;
the upper surface (2s) of the conveying body comprising an orifice (4) enabling insertion of the mushroom into the chamber, wherein an edge of the orifice defines an upper end of the chamber;
the chamber (3) comprising an upper portion (3s) extending from the orifice (4) of the upper surface (2s) of the conveying body (2) towards the lower surface (2i) of the conveying body (2) and being shaped to at least partially accommodate a cap of the mushroom; and
the chamber (3) comprising a lower portion (3i) extending from the upper portion (3s) of the chamber towards the lower surface (2i) of the conveying body and being shaped to at least partially accommodate a stem of the mushroom,
the lower portion (3i) of the chamber (3) has a circular cylindrical shape, **characterized in that** a distance between ends of the cylinder of the lower portion of the chamber of the conveying body, along an axis of revolution of the cylinder, is between 40 and 80 millimeters; and a diameter of the cylinder is between 12 and 32 millimeters.

2. The conveying device according to the preceding claim, wherein the upper portion (3s) of the chamber (3) has a shape of a truncated cone where an end of the truncated cone having the smallest diameter is positioned opposite the orifice (4) of the upper surface (2s) of the conveying body (2), and wherein the lower portion (3i) of the chamber (3) extends from the truncated cone towards the lower surface (2i) of the conveying body (2).

3. The conveying device according to the preceding claim, wherein:
a distance between the ends of the truncated cone of the upper portion (3s) of the chamber (3) of the conveying body (2), along an axis of revolution of the truncated cone, is between 20 and 50 millimeters;
a maximum diameter of the truncated cone is between 90 and 110 millimeters; and
a minimum diameter of the truncated cone is between 12 and 32 millimeters.

4. A system (100) adapted to convey mushrooms, comprising:
a first conveyor (110) having a conveyor belt adapted to transport mushrooms between a loading zone (Zc) for loading the mushrooms into devices for conveying individual mushrooms according to any one of the claims 1 to 3 and an unloading zone (Zd) for unloading the mushrooms into packaging devices;
a plurality of conveying devices (1) for conveying individual mushrooms according to any one of the claims 1 to 3; and
a cooling device (120) positioned between the loading zone (Zc) and the unloading zone (Zd) and adapted to cool the mushrooms when the mushrooms are respectively positioned in their conveying device.

5. The system (100) according to the preceding claim, also adapted to package mushroom, further comprising a filling device (130) configured to fill packaging devices with mushrooms,
the filling device (130) comprising a first packaging gripper robot (131) adapted to grasp a mushroom from a conveying device (1) and then to position the mushroom in a packaging device.

6. The system according to the preceding claim, wherein the filling device (130) further comprises a multihead weigher (132) and a second packaging gripper robot (133), the multihead weigher (132) comprising a plurality of scales (132b);
each scale (132b) of the plurality of scales (132b) being configured for respectively weighing a mushroom when the mushroom is positioned in its conveying device (1);
the multihead weigher (132) being configured for selecting a sub-plurality of mushrooms among the plurality of mushrooms weighed by the plurality of scales (132b) in order to fill a specific packaging device; and
the second packaging gripper robot (133) being adapted to grasp the selected sub-plurality of mushrooms and to deposit the sub-plurality of mushrooms in the specific packaging device.

7. The system according to the preceding claim, wherein the second packaging gripper robot (133) has a sub-plurality of pneumatic suction cups adapted to grasp the sub-plurality of mushrooms by their cap when the mushrooms are positioned in their respective conveying device, the second packaging gripper robot (133) being configured to deposit the sub-plurality of mushrooms in the specific packaging device so that the caps of the mushrooms are oriented substantially towards the direction opposite to a bottom of the specific packaging device.

8. The system according to any one of the claims 4 to 7, further comprising:
a second conveyor (140) adapted to transport mushrooms from a mushroom growth chamber to the loading zone (Zc) of the first conveyor (110);
a positioning gripper robot (150) adapted to grasp a mushroom transported by the second conveyor (140) and to position the mushroom in a conveying device positioned on the first conveyor (110); and
a camera (160) configured for selecting mushrooms to be grasped by the positioning gripper robot (150), the selection being made based on at least one of a shape or a color of the cap of the mushrooms.

9. The system according to the preceding claim, wherein the first conveyor (110) comprises a plurality of conveyor belts (Bd), at least some of the conveyor belts (Bd) being associated with a mushroom size interval;
wherein the camera (160) is also configured for determining sizes of mushrooms; and
wherein the system (100) further comprises a guide element (170) configured to guide a conveying device (1) that holds a mushroom of a specific size determined by the camera (160) towards a conveyor belt (Bd) of the first conveyor (110) being associated with a size interval that includes the specific size.

10. The system according to any one of the claims 8 or 9, wherein the second conveyor (140) is a belt conveyor comprising a belt having orifices, each orifice of the belt accommodating a mushroom by inserting a stem of the mushroom into the orifice.

11. A method (1000) for conveying a mushroom, comprising:
placing (1100) a mushroom in the chamber of a conveying device (1) according to any one of the claims 1 to 3;
positioning (1200) the conveying device (1) on a conveyor belt of a conveyor; and
conveying (1300) the conveying device (1) on the conveyor belt of the conveyor.

12. The method according to the preceding claim, wherein the placing (1100) of a mushroom in the chamber of the conveying device is carried out by a gripper robot.

13. Use of a conveyor to convey mushrooms, each mushroom being conveyed individually by a conveying device (1) according to any one of the claims 1 to 3.
